# EUROPEAN PATENT APPLICATION

(11) **EP 2 933 461 A1**
(43) Date of publication of application: **21.10.2015**
(21) Application number: 15159549.3
(22) Date of filing: 18.03.2015
(51) Int. Cl.: F02C 7/04, B64D 33/02

(54) **PROPULSION ENGINE**

(30) Priority: 17.04.2014 GB 201406952
(71) Applicant: Rolls-Royce plc, London SW1E 6AT (GB)
(72) Inventor: Stretton, Richard, Derby, Derbyshire DE24 8BJ (GB)
(74) Representative: Rolls-Royce plc

(57) **Abstract**

This disclosure concerns an air intake (62) for an open rotor engine (50) comprising a propulsive blade array (52,54) having a plurality of blades each having a gas washed surface extending radially outwardly relative to an axis or rotation (56) from a root end to a tip. The intake (62) has first (64) and second (70) circumferential walls extending about the axis (56) of rotation at a location downstream of the propulsive blade array (52,54). The first (64) and second (70) walls are spaced in a radial direction so as to define an annular passage with an opening (72) having a height dimension extending a portion of the way along the propulsive blade array span. The intake (62) further comprises an annular lip (74) arranged about the axis of rotation (56) at a radial distance such that the lip (74) bifurcates the annular passage at a height which substantially separates a boundary layer flow portion of the intake flow from a remainder of the intake flow. The lip (74) may define a collection scroll for foreign object debris and cooling air for the engine.

## Description

### BACKGROUND OF THE INVENTION

The present invention relates to engines e.g. open rotor propulsion engines and more particularly to axial flow combustion engines.

Open rotor gas turbine engines, often referred to as 'propfans', comprise an unducted propulsive fan that depends outwardly in a radial direction beyond the outer surface of the engine nacelle. The potential for increased fuel efficiency of such engines over ducted turbofan engines is generally known.

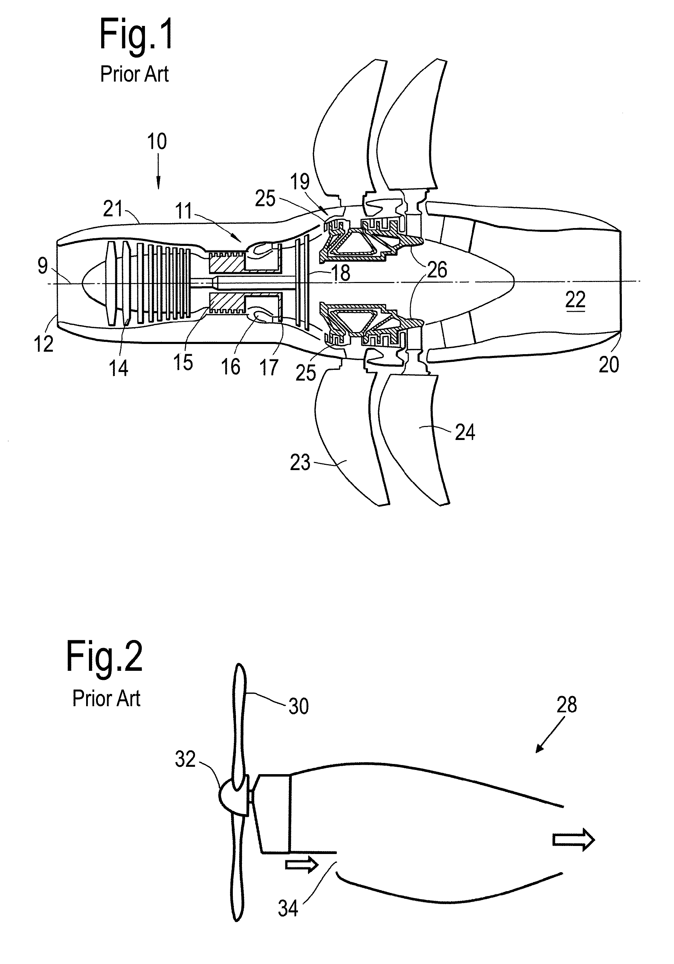

Referring to Figure 1, a twin-spooled, contra-rotating propeller gas turbine engine is generally indicated at 10 and has a principal and rotational axis 9. The engine 10 comprises a core engine 11 having, in axial flow series, an air intake 12, an intermediate pressure compressor (IPC) 14, a high-pressure compressor (HPC) 15, combustion equipment 16, a high-pressure turbine 17, low pressure turbine 18, a free power turbine 19 and a core exhaust nozzle 20. A nacelle 21 generally surrounds the core engine 11 and defines the intake 12 and nozzle 20 and a core exhaust duct 22. The engine 10 also comprises two contra-rotating propellers 23, 24 attached to and driven by the free power turbine 19, which comprises contra-rotating blade arrays 25, 26.

The propellers 23, 24 normally provide the majority of the propulsive thrust from a rear end of the engine 10 and accordingly, such a configuration is often referred to as a 'pusher'. An alternative configuration, in which the propulsive thrust is provided from the front of the engine is often referred to as a 'puller' configuration. Each of the puller and pusher configurations has different advantages and disadvantages. For example, the pusher configuration 10 shown in Fig. 1 has an open intake 12 at the leading end of the engine, whereas, for a puller configuration, the intake is positioned behind one or more rows of propulsive rotor blades, which therefore disturb the air intake flow in use.

Furthermore the spinner diameter of a puller open rotor engine is relatively large, thereby reducing the height of an annular intake opening for a given area of flow opening. This poses an increased risk of foreign object debris (FOD) blocking the intake, which can have serious adverse consequences on engine operation. Also, the larger frontal area of the spinner means that there is an increased likelihood of FOD or other matter, such as water or ice, impacting the spinner and being diverted towards the annular air intake.

US 5,139,545 (Rolls-Royce plc.) discloses that a bifurcation can be provided in an inlet duct for a helicopter engine in order to scavenge solid matter from the airflow through the inlet duct.

The inventor has also determined that the boundary layer flow can develop along the axial length of a puller configuration spinner such that an annular intake behind the open rotor blades receives predominantly boundary layer flow. This poses a problem because boundary layer flow is of significantly lower energy than the main flow away from the outer surface of the nacelle and so the intake of boundary layer flow into the core engine results in low pressure recovery and thus engine performance penalties. This problem is determined to be particularly prevalent for a plurality of contra-rotating blade rows due to the increased axial length requirement of the spinner.

Turning to Fig. 2 there is shown a schematic of a conventional turboprop engine 28 for which the propellers 30 are mounted to a spinner 32 of relatively short axial length. The engine 28 makes use of a directional, chin-like intake 34, which ensures that the intake extends radially outboard of the boundary layer flow and thus captures a portion of the non-boundary layer flow downstream of the propeller 30.

It is an aim of the present invention to provide an intake arrangement for an open rotor propulsion engine which at least partially mitigates one or more of the problems described herein.

### BRIEF SUMMARY OF THE INVENTION

According to a first aspect of the invention there is provided an air intake for an open rotor engine comprising a propulsive blade array having a plurality of blades each having a gas washed surface extending radially outwardly relative to an axis or rotation from a root end to a tip, thereby defining a blade span dimension, the intake comprising first and second circumferential walls extending about the axis of rotation at a location downstream of the propulsive blade array, the first and second walls being spaced in a radial direction so as to define an annular passage with an opening having a height dimension extending a portion of the way along the propulsive blade array span, wherein the intake further comprises an annular lip arranged about the axis of rotation at a radial distance such that the lip bifurcates the annular passage at a height which substantially separates a boundary layer flow portion of the intake flow from a remainder of the intake flow.

As will be appreciated the engine need not be an open rotor engine and may be any engine, including for instance gas turbine engines such as turbofans and piston engines having a propulsive blade array.

The lip may define an opening to first and second passage portions or ducts. The first passage portion may comprise an air intake for a compressor and/or the core engine. The compressor may comprise a high pressure compressor or an intermediate pressure compressor, which may in flow series feed a high pressure compressor. The first passage portion may be arranged to receive the remainder of the intake flow, e.g. the main intake flow, substantially excluding boundary layer flow.

The first passage portion may be the radially outside of the second passage portion.

The second passage portion may provide a cooling flow for the engine or one or more components/sub-assemblies thereof. The second passage portion may feed a cooling passage system or network. Additionally or alternatively, the second passage portion may be arranged to trap or retain material through the opening of the annular passage. The second passage may trap material that is of substantially greater density than air, such as liquid or solid phase material, including particulate or larger materials.

The first and/or second passage portions may be annular in form.

The annular passage may open in an upstream direction, i.e. towards a trailing edge of the blades in the propulsive blade array.

The first wall may comprise a leading edge located in the main gas flow (i.e. the non-boundary layer flow) from the propulsive blade array. The annular gap between the leading edge of the first wall and the second wall may define the intake opening. The first and/or second wall may be shaped such that the height of the annular passage downstream of the opening is greater than the height at the opening. The first wall may slope away from the second wall behind the leading edge.

The second wall may comprise a static circumferential wall which may extend in a downstream direction from an outer surface of the propulsive blade array rotor. The outer surface may extend between the root ends of the gas washed surfaces of the blades in the array. The second wall may be substantially flush with said outer surface, e.g. in a radial direction. The propulsive blade array (or at least a rear row thereof) may be mounted to a common support any may comprise one or more annulus fillers defining the outer surface.

The lip may be downstream of the annular passage opening, e.g. in an axial direction. The lip may be located in an enlarged height portion of the annular passage. The height of the lip in the annular passage may be greater than half of the height of the annular passage opening.

The lip may be a leading edge of an intermediate wall or structure located in the annular passage. The intermediate structure may be a flow diverting structure and may comprise one or more smoothly curved wall. The structure may comprise radially inner and outer sides.

The second passage portion may be angularly offset from the first passage portion. The fist passage portion may extend in a generally axial direction in the vicinity of the intake opening and/or lip.

The intermediate wall and/or second passage portion may define an enclosure or mouth which opens in an upstream direction. The enclosure may have a rear/downstream wall such that the second passage portion is closed in a downstream direction about a portion (e.g. a major portion) of its annulus.

The intermediate wall and/or second passage portion may comprise one or more outlet openings. A plurality of outlet openings may be provided, e.g. at discrete locations and/or spaced about the axis of rotation. A plurality of different types of outlet may be provided. One or more outlet opening (e.g. a first outlet) may feed an engine cooling and/or ventilation flow. One or more outlet opening (e.g. a second outlet) may provide a material/debris outlet. The first outlet may be provided at a location above the axis of rotation and/or the second outlet may be provided below the axis of rotation. This may help to ensure a substantially clean or debris-free air intake for cooling/ventilation flow. The first outlet may be provided at top dead centre and/or the second outlet may be provided at bottom dead centre.

One or more vanes may be provided in the second passage portion, downstream of the lip. The second passage portion may turn radially inward towards the axis of rotation downstream of the lip.

In one example, a third passage portion may be provided. The annular passage may comprise a second bifurcation, for example downstream of the first bifurcation. The second bifurcation may be located in the first passage portion and may define a bifurcation between the first and third passage portions. The third passage portion may or may not be annular in form. The third passage portion may comprise a recess for collection of debris. The third passage portion may be arranged substantially behind the intake opening, for example in line therewith and/or opening in a substantial axial direction.

The third passage portion may be radially outside the first and/or second passage portions. The third passage portion may be substantially closed at its downstream end. The third passage portion may take the form of a mouth in section. The third passage portion may be formed at least in part by the first wall. The wall of the third passage portion may be curved.

Either or both of the second and/or third passage portions may comprise a debris collection scroll. The third passage portion may be beneficial in catching larger debris.

According to a second aspect of the invention, there is provided a gas turbine engine comprising the air intake of the first aspect. According to further aspects of the invention there may be provided a gas turbine engine compressor system and/or a gas turbine engine cooling system comprising an air intake according to the first aspect.

In any aspect, the propulsive blade array may be forward in an axial direction, or upstream in a flow direction, of the core engine. The propulsive blade array may be located on a frontal spinner of the engine. Two rows of propulsive blades may be provided, for example in a contra-rotating configuration.

Wherever practicable, any of the essential or preferable features defined in relation to any one aspect of the invention may be applied to any further aspect. Accordingly the invention may comprise various alternative configurations of the features defined above.

### BRIEF DESCRIPTION OF THE DRAWINGS

Practicable embodiments of the invention are described in further detail below by way of example only with reference to the accompanying drawings, of which:
Figure 1 shows a longitudinal section through a gas turbine engine according to the prior art;
Figure 2 shows a side view of a turboprop engine according to the prior art;
Figure 3 shows a schematic longitudinal section through a gas turbine engine according to a first example of the present invention;
Figure 4 shows a schematic longitudinal section through an example of a core engine for use in a propulsion engine according to the invention;
Figure 5 shows a schematic longitudinal section through a gas turbine engine according to a second example of the present invention; and,
Figure 6 shows a three dimensional view of an air intake according to the second example as viewed at a longitudinal section through the engine.

### DETAILED DESCRIPTION OF THE INVENTION

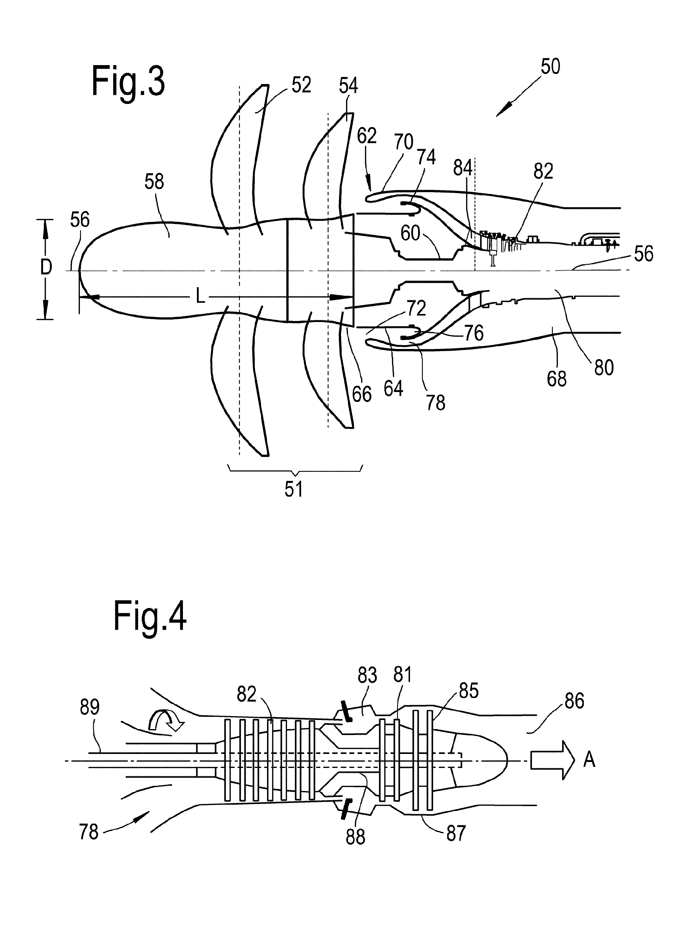

Turning to Fig. 3, there is shown an open-rotor, axial-flow propulsion engine 50 according to a 'puller' configuration. In this example, the gas turbine engine 50 comprises a propulsive rotor assembly 51 having two rows of propulsive blades 52 and 54, which rotate in opposing directions in use, i.e. as a contra-rotating open-rotor configuration. The principle engine axis 56 defines the longitudinal axis of the engine, as well as the rotational axis of the rotor assembly 51. It can be seen that the diameter D of the spinner 58 of the rotor assembly is relatively large compared to the blade span. Furthermore the length of the propulsive rotor assembly L from the spinner tip to the end of the second row 54 of rotor blades is also relatively long compared to a conventional turboprop or turbofan engine.

Each row of blades 52, 54 comprises a circumferential array of generally radially extending fan/propeller blades, which are angularly spaced about axis 56. The propulsive rotor assembly is driven by the core engine by a shaft 60 as will be described below. The rotor assembly typically comprises a gearing for driving contra-rotation of the blade rows 52, 54 in a conventional manner. Whilst the invention has been developed based on such a contra-rotating configuration, it is to be noted that the invention may also be applied to a single row, open-rotor fan/propeller configuration.

An air intake 62 according to an example of the invention is provided behind the row of blades 54. The intake 62 comprises an inner circumferential wall 64 which extends rearward from the rear edge of the outer airwashed spinner wall 66 of the rotor assembly for the row of blades 54, for example forming the hub line of the blade array 54. The walls 64 and 66 are typically flush. The inner circumferential wall 64 is static and terminates immediately adjacent the rotating outer wall 66.

The engine nacelle 68 terminates at an annular leading edge or wall 70 which extends circumferentially about axis 56 to form an outer wall of the inlet at a greater radial distance than inner wall 64 so as to define an annular gap or opening 72 between the inner wall 64 and the opposing, inwardly-facing surface of the nacelle 68.

The air intake space between the inner 64 and outer 70 walls provides an inlet throat arrangement.

This flow opening 72 is of height sufficient to accommodate not only the boundary layer flow adjacent the inner wall 64 but also a portion of the main flow region emanating from the trailing edge of the blades 54. In this regard, it will be appreciated that the boundary layer flow comprises a region of flow adjacent a wall in which the flow velocity is less than that of the free-stream flow due to skin friction and viscous forces. The boundary layer thickness will vary dependent on flow conditions and a conventional boundary layer definition may be used to calculate the specific boundary layer for a particular engine geometry under a normal range of engine operation. It is envisaged that the boundary layer thickness will typically be in the region of 10 to 50mm. The height of the annular opening (i.e. the dimension between the inner wall 64 and the inner surface at the leading edge of the nacelle 68) will typically be between 70 and 150mm. The minimum opening height may set according to FOD size requirements and the maximum height may be set according to the flow requirements of the engine core. Whilst global dimensions are defined in these examples, it will be appreciated that the engine dimensions may vary between different engine types and so the annular opening height may otherwise be defined as a multiple of a typical boundary height for a particular engine and may lie between 2 or 3 and 5 or 6 times the boundary layer height.

The height of the intake opening 72 is over-sized in that it is larger than required to satisfy the flow rate demands of the core engine compressor.

Behind the annular opening 72, is defined a rearwardly-extending, annular passage between the inner wall 64 and the nacelle. The height of the passage increases behind the opening 72. In this regard, the inner surface of the outer wall 70 slopes away from the inner wall 64 so as to define the increased passage height for the intake.

Within the intake passage, typically set back from the passage opening 72 by a distance of at least twice the height of the opening 72, is located an intermediate body or wall 74 defining a lip at its leading edge. The body 74 is generally annular in form and depends outwardly from the inner wall 64 so as to form a partition within the passageway, thereby defining radially inner and outer passages therein.

The radially inner passage 76 defines an annular recess or mouth formation which is intended to catch FOD passing through the intake opening 72 in use. In this regard the inner surface 64 curves upward and forward towards the leading edge or lip of the intermediate body 74 so as to define a forward facing mouth structure when viewed in section. The radially inner passage 76 defines a collection scroll or trap for solid matter carried into the intake.

The radially outer annular passage 78 defines the inlet duct for the core engine 80 compressor as will be described below. The height of the inlet duct 78 typically increases gradually behind the lip of the intermediate body 74 towards the compressor, for example to provide near uniform annulus flow area as the duct transitions from the nacelle to the compressor inlet and accounting any blockage from the vanes 84. The passage typically turns radially inwardly towards the compressor 82 and may comprise an array of vanes 84 upstream of the compressor rotor.

The height of the leading edge of the intermediate body 74 from the inner wall 64 is typically greater than half of the height of the opening 72 and more typically at least two-thirds or three-quarters of said opening height. In some examples, the height of the body 74 leading edge may be substantially equal to the height of the opening 72. The intermediate wall 64 height may be, for example in the region of 80 to 120 mm, such as approximately 100mm. In any example a trade-off is achieved between the volume of air passing into the collection scroll and the effectiveness with which FOD is prevented from entering the duct 78.

In any example the height/radial dimension of the passage 76 or 90 (to be described below) may be in the region of 50 to 150 mm, such as approximately 100 mm.

Tuning now to Fig. 4, a schematic example of the core engine 80 is shown in section. The core engine 80 has a principal and rotational axis 56 and comprises, in flow series, engine air intake 78, a compressor 82, combustion equipment 83, a high-pressure turbine 81 a low-pressure turbine 85, and a core engine exhaust 86. A casing 87 generally surrounds the core engine 80 and the space between the casing 87 and nacelle 68 defines one or more internal cavities which house engine equipment. It will be appreciated by those skilled in the art that the various possible mounting arrangements for gas turbine engines on aircraft result in various possible forms of nacelle.

The gas turbine engine 50 works in a conventional manner so that air entering the intake 78 is compressed by the rotating blades of compressor 82 prior to entering the combustion equipment 83 comprising a combustor/combustion chamber.

The axial compressor 82 comprises a plurality of discs mounted to a drum, each disc having blades mounted thereon in a conventional manner. Each compressor disk may have associated therewith a circumferential set of fixed stators or vanes depending inwardly from the casing 87 so as to provide a plurality of compressor stages.

The compressed air enters the combustor 83 where it is mixed with fuel emanating from fuel injectors and the mixture combusted. Upon exit from the combustion equipment, the resultant hot combustion products expand and thereby drive the high and low-pressure turbines 81 and 85 before being exhausted through the exhaust 86 in the direction of arrow A.

The high pressure turbine 81 is connected to and thereby drives the high pressure compressor 82 by interconnecting shaft 88 (i.e. the HP shaft). The low pressure turbine 85 is connected to, and thereby drives, the propulsive rotor assembly 51 via shaft 60 (i.e. the LP shaft). A gearing arrangement (not shown) is connected in the force path between the LP shaft 60 and the rotors 52, 54 and/or between the rotors 52, 54 themselves in order to drive the rotors at a suitable rotational speed and direction to provide propulsive thrust for an aircraft. The core engine exhaust 86 comprises a nozzle formation to provide additional propulsive thrust.

In other embodiments it is possible that an intermediate pressure compressor and turbine may be provided, connected by an intermediate shaft, for example in the manner of a three-shaft engine configuration. Other conventional gas turbine engine configurations, for example comprising a booster, may be provided.

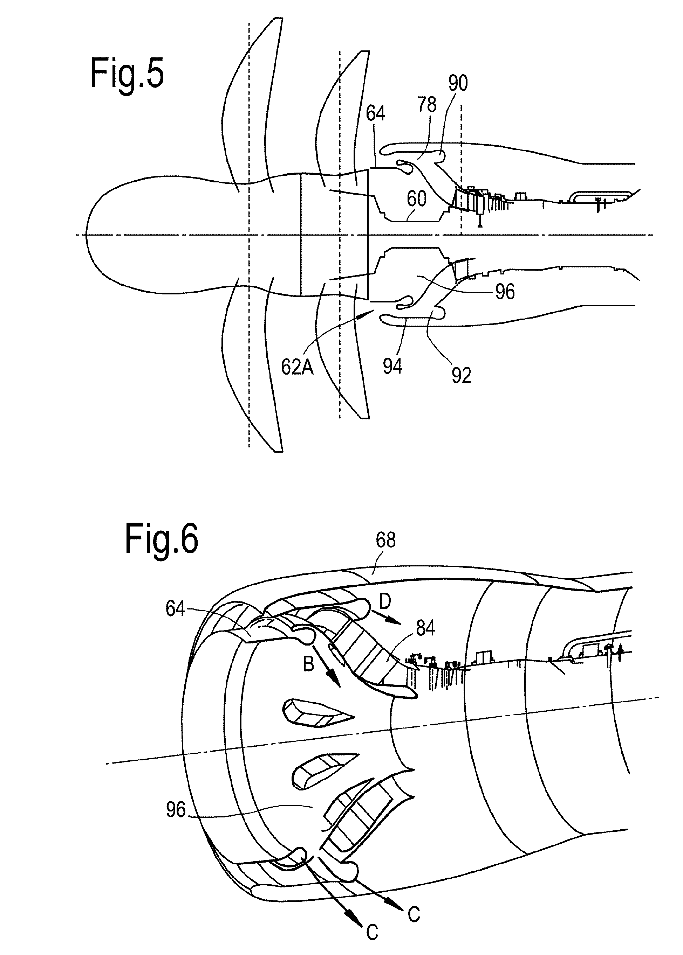

Turning now to Figure 5, an alternative example of the invention is shown in which the air intake 62A has been modified. All the features described above in relation to Figures 3 and 4 apply to the embodiment of Fig. 5 except for the differences described below. Like features will not be described again for conciseness.

In Figure 5 a further passage portion 90 depends from the passage 78. The further passage 90 is depends from the outer wall of the passage 78 at a location radially outside of the inner passage 76. The passage 90 is generally annular in shape and may be of a form generally similar to that of collection scroll 76 but disposed radially outwardly thereof (i.e. defining an annulus about axis 56 of greater radius than that of passage 76).

The passage 90 is formed by a further bifurcation in the passage 76 downstream of the intermediate wall 74. In other embodiments, the passage 90 could potentially be alongside or even upstream of wall 74 dependent on the specific engine geometry to be accommodated.

The bifurcation between passages 78 and 90 is formed by the outer wall 94 of the passage 78 depending away from the path of the compressor inlet duct 78 so as to form a recess. At a radially inner edge of the recess is provided a wall portion 92 which terminates at a leading edge, defining a lip or corner about which the flow in the passage bifurcates.

The additional passage 90 in this example serves as a trap or collection scroll for larger FOD, the mass/inertia of which could cause it to bypass the inner collection scroll 76 in use. The use of additional passage 90 may additionally or alternatively allow the axial length of the intake to be reduced without compromising FOD protection.

The passage 90 will typically be larger in height than passage 76.

Fig. 6 shows the arrangement of Fig.5 with the rotor assembly removed. It will be appreciated that in any embodiment, a further internal cavity 96 may be defined in the spaced bounded between the LP shaft 60 and the circumferential wall 64 and/or the inner wall of the compressor intake duct 78.

Either or both of the annular passage portions 76 and 90 may have one or more outlets. Typically the, or each respective, annular passage 76, 90 is closed at its downstream end for a majority of the annulus but has one or more outlet openings to allow air and/or collected matter (FOD and/or liquid) to leave the annular passage portion. It is proposed in this example that an air outlet would be provided at top dead centre of the passage above the axis 56 and that a FOD (solid/liquid phase material) outlet would be provided at bottom dead centre below the axis 56. However the precise location of either or both outlet may depend on the engine architecture and may be moved accordingly.

The locating of an air outlet above a FOD outlet allows air to be scavenged for use in an engine cooling system. The liquid or solid phase matter will tend to fall under gravity upon being trapped within the collection scroll 76 or 90 such that an air outlet from the scroll located above the axis 56 will tend to avoid ingestion of FOD. In this manner clean air can be bled from either inlet scroll.

FOD will thus tend to collect in the lower portion of the scroll, from where it can be exhausted overboard in the general direction of arrows C in Fig. 6. One or more suitable outlet duct may open to an exterior of the nacelle for this purpose.

In contrast the scavenged air will pass through the upper outlet duct in the general direction of arrows B and/or D in Fig. 6 via suitable ducts to the relevant cooling system. This clean air is then used for ventilation of one or more of the engine cavities and/or one or more specific cooling applications in the engine, such as, for example heat exchanger cooling and/or another conventional cooling need.

The scavenged airflow from passage 76 may pass through the hollow interior of vanes 84 in order to cool engine equipment that is located radially outside of the compressor duct 78.

The present invention advantageously provides a core engine inlet flow that is radially outboard of the spinner boundary layer and any water or debris collected close to the spinner surface.

FOD and water may thus pass via a direct path (e.g. a substantially straight line path aft in an axial direction) into collection scroll 76 without adversely affecting core engine operation both in terms of FOD ingestion and operational efficiency due to the low-energy boundary layer flow. The boundary layer flow is diverted away from the core engine compressor and can be used for cooling/ventilation purposes for which a lower energy flow is more suitable. In this manner an abnormally oversized inlet throat can be used to significantly benefit engine operation in an unconventional manner.

The collection scroll has been found to provide a beneficial air reservoir which feeds the relevant cooling system a generally constant and predictable pressure. Additionally the circumferentially uniform upstream pressure field created by the annular inlet may provide benefits in either or both of rotor performance and noise reduction.

Furthermore it has been found that the annular intake arrangement proposed by the present invention can offer reduction in length of the engine/powerplant, for example by up to 500 mm when compared to a more conventional chin inlet offering comparable flow rates. This potential for engine length reduction has a significant implication on weight and drag reduction for the engine. The oversized annular inlet also reduces the likelihood of FOD blockage.

In summary, the above-proposed separate capture of the boundary layer and core compressor flows may permit any or any combination of the following advantages:
- An oversized inlet throat to avoid FOD blockage
- Low energy spinner boundary layer is diverted for heat exchanger cooling and zone ventilation.
- Avoids dedicated cooling air off-takes (e.g. from the compressor) for heat exchangers and zone ventilation
- Protects heat exchangers from FOD damage
- Captures free stream air for compressor flow, to restore inlet pressure recovery and performance to similar levels as a pitot-style inlet or chin inlet.

## Claims

1. An air intake for an engine comprising a propulsive blade array arranged for rotation about an axis, the intake comprising first and second circumferential walls extending about the axis of rotation at a location downstream of the propulsive blade array, the first and second walls being spaced in a radial direction so as to define an annular passage with an opening having a height dimension, wherein the intake further comprises an intermediate formation arranged about the axis of rotation at a radial distance such that the intermediate formation bifurcates the annular passage at a height which substantially separates a boundary layer flow portion of the intake flow from a remainder of the intake flow.

2. An air intake according to claim 1, wherein the intermediate formation defines an opening to each of first and second intake passage portions, the first passage portion comprising an air intake for a core engine compressor.

3. An air intake according to claim 2, wherein the first passage portion is arranged radially outward of the second passage portion and receives the remainder of the intake flow.

4. An air intake according to claim 2 or 3, wherein second passage portion comprises an intake for an engine cooling system.

5. An air intake according to any one of claims 2 to 4, wherein the second passage portion comprises a collection scroll for solid and/or liquid phase material entering the intake opening.

6. An air intake according to any one of claims 2 to 5, wherein the second passage portion comprises an annular recess having one or more discrete outlet openings at an angular position about its circumference.

7. An air intake according to claim 6, wherein the second passage portion comprises an outlet opening for flow of air from the annular recess, said outlet opening being located above the axis of rotation.

8. An air intake according to claim 6 or 7, wherein the second passage portion comprises an outlet opening for removal of solid and/or liquid phase material from the annular recess, said outlet opening being located below the axis of rotation.

9. An air intake according to any one of claims 2 to 8, wherein the first passage portion comprises one or more vanes spanning the height of the first passage portion and the vanes provide a flow path in communication with the second passage portion.

10. An air intake according to any one of claims 2 to 9, wherein annular passage comprises a second bifurcation, thereby defining a third passage portion and optionally the intermediate formation comprises a first intermediate formation depending from one of the first and second walls and the second bifurcation is provided in the first passage portion by a further intermediate formation depending from the other of the first and second walls.

11. An air intake according to claim 10, wherein the third passage portion comprises an annular recess arranged to receive solid and/or liquid phase material entering the annular passage opening.

12. An air intake according to any one of claims 10 to 11, wherein the third passage portion comprises one or more outlet opening for removal of cooling air and/or materials from the third passage portion.

13. An air intake according to any preceding claim, wherein the intermediate formation is located downstream of the annular passage opening and the first and/or second wall are shaped such that the height of the annular passage downstream in the vicinity of the intermediate formation is greater than the height at the opening.

14. An air intake according to any preceding claim, wherein the intermediate formation comprises a lip formation depending radially outwardly from the second wall. 1.

15. An air intake according to any preceding claim, wherein the height of the intermediate formation is greater than half or two-thirds of the height of the annular passage opening.
